# EUROPEAN PATENT SPECIFICATION

(11) **EP 1 053 683 B1**
(45) Date of publication and mention of the grant of the patent: **10.11.2004**
(21) Application number: 00109962.1
(22) Date of filing: 11.05.2000
(51) Int. Cl.: A22C 11/12

(54) **Improved tying machine for stuffed-meat products in general and for sausages in particular**
Verbesserte Bindemaschine für fleischgefüllte Produkte wie Würste
Machine améliorée pour lier de la chair à saucisses ensachée et des saucisses en particulier

(30) Priority: 19.05.1999 IT VI990102
(43) Date of publication of application: 22.11.2000
(73) Proprietor: Borgo, Antonio, 36016 Thiene (VI) (IT); Borgo, Stefano, 36016 Thiene (VI) (IT)
(72) Inventor: Borgo, Antonio, 36016 Thiene (VI) (IT); Borgo, Stefano, 36016 Thiene (VI) (IT)
(74) Representative: Grünecker, Kinkeldey, Stockmair & Schwanhäusser Anwaltssozietät

(56) References cited:
- EP-A- 0 865 732
- US-A- 4 401 329
- US-A- 5 775 985

## Description

The present invention relates to an improved tying machine for stuffed-meat products in general and for sausages in particular, but also for so-called "cacciatori", "chorizos", "mignon", and the like.

It is known that traditional tied pork meat, and particularly sausages, consist of ground pork meat, with salt and seasonings, in a tubular container of animal origin which is generically called casing. At regular intervals, the casing is crimped, and ties with one or more turns of twine are applied at the crimps. It is very often advantageous, from the point of view of preservation and subsequent separation into portions, to provide crimps between the sausages which are slightly elongated, on the order of ten millimeters, and double ties applied to the ends of the crimps. In modern industrial sausage-making factories, both of these kinds are currently obtained in rather large amounts by combining stuffing machines provided with a portion-forming unit and automatic or semiautomatic tying machines. In detail, "spaced" sausages are produced by applying particular lever devices to conventional tying machines. In this regard, European patent application No. 98810106.9 discloses a device which is constituted by a first pair of casing choking levers, arranged at the inlet of the tying machine, which cooperates with a second moving pair of levers which is arranged behind the first one in the direction along which the meat to be stuffed is fed. Substantially, the operation of this device entails the closure of the first pair of levers so as to form the crimp, the execution of the first tying by the tying machine, then the closure of the second pair of levers and its movement by a few millimeters in the meat feed direction, so as to extract the casing from the stuffing tube, and finally the execution of the second tie. At the end of this last operation, both pairs of levers are released and a subsequent portion is filled; this is again followed by the above-described operations.

A first drawback of this device is the fact that the casing changing operation is rather troublesome and long for the operator. First of all, it entails moving the tying machine away from the stuffing machine and preparing a new casing fitted on the stuffing tube, then it entails moving the two machines mutually closer again so that the free end of the stuffing tube coincides with the inlet of the transit duct of the tying machine. Moreover, the pairs of levers tend to jam because they are provided with several articulations which poorly withstand the intense operating rates of tying machines and stuffing machines. Finally, the adjustment and fine-tuning of the levers is demanding and frequent, because it is necessary to synchronize their opening and closure, and in general their movements, with extreme precision, mainly according to the operating rate. Clearly, these aspects as a whole have a negative effect on production and accordingly entail a true cost increase.

Document US 5 775 985 discloses an apparatus for applying clips or ties to stuffed food products for separation into discrete links. In this prior art machine, a closing device is moved along a path and activated to apply a prior double closure in the form of clips or ties to the stuffed food product; once the prior double closure has been applied, the closing device is first moved back to its initial position and then moved again along the path. Finally, the closing device is activated again to apply a second double closure to the stuffed product.

The aim of the present invention is to overcome the drawbacks of the above-cited prior art tying machines for stuffed-meat products.

An object of the present invention is to provide an improved tying machine for stuffed-meat products in general and sausages in particular which allows to change casing, both for ordinary sausages and for "spaced" ones, rapidly and without separating the tying machine from the stuffing machine.

A further object of the present invention is to provide a tying machine which has a simplified structure, so as to limit its manufacturing costs and so as to avoid any jamming, with consequent machine downtimes for repairs, during production.

Another object of the present invention is to provide a tying machine which operates with excellent synchronization with respect to any modem stuffing machine.

Another object of the present invention is to provide a tying machine which is compact and reliable and can be easily transported.

This aim, these objects and others which will become apparent hereinafter are achieved by an improved tying machine as claimed in claim 1.

The tying machine further includes a means for translatory motion in this direction which is interposed between the wall of the structure that faces the device and the device itself.

Further characteristics and advantages of the present invention will become apparent from the description of a preferred but not exclusive embodiment thereof, illustrated only by way of non-limitative example in the accompanying drawings, wherein:
Figure 1 is a front view of the tying machine according to the invention, shown cooperating with a combined stuffing and portion-forming machine;
Figure 2 is a partially sectional detail view of the tying machine of Figure 1, taken along a vertical central plane;
Figures 3 and 4 are front views of the means for crimping the filled casing in two operating positions;
Figure 5 is a detail view of a portion of a string of "spaced" sausages.

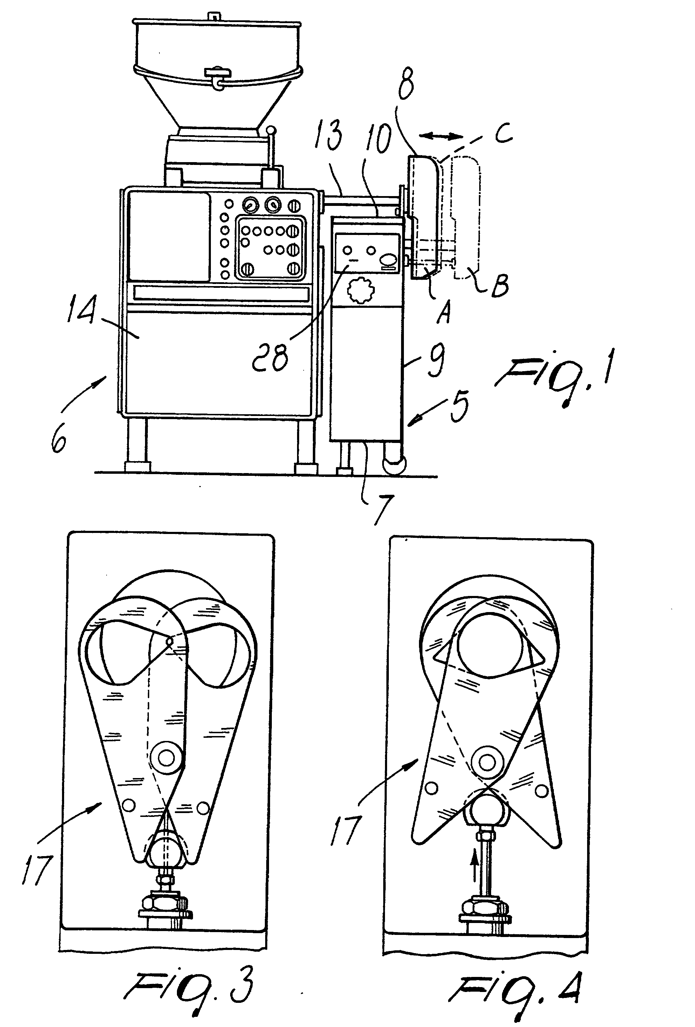

With reference to the above figures, the improved tying machine for stuffed-meat products in general and for sausages in particular, generally designated by the reference numeral 5, works in combination with a stuffing machine 6. The tying machine 5 substantially includes a cabinet-like supporting structure 7 and a tying device 8 to the side of one of the walls 9 of the structure 7, in a raised position with respect to the working surface 10, so that the inlet 11 and the outlet 12 of the device 8 protrude with respect to the structure 7. In turn, the stuffing machine 6 is provided with a stuffing tube 13 which protrudes from the body 14 laterally and in a horizontal direction, with an end mouth 15 for feeding the meat to be stuffed. Preferably, the inlet 11 of the device 8 is at the level of the stuffing tube 13, so that once the tying machine 5 and the stuffing machine 6 have been arranged side by side as shown in Figure 1, its mouth 15 coincides with the inlet 11. The tying device 8, which is per se known, is of the type in which the reel is coaxial to the direction in which the meat to be stuffed is fed, and comprises a tying means and a crimping means for the filled casing, generally designated by the reference numerals 16 and 17 respectively. The device 8 assumes, on command, positions (C), in the direction in which the meat to be stuffed is fed, which are intermediate between two extreme positions: respectively, a position (A) which is closer to the structure 7 and in which the inlet 11 is practically in contact with the mouth 15, as shown more clearly in Figure 2, and a spaced position (B), in which the inlet 11 is spaced a few centimeters from the mouth 15. In order to perform these movements there is provided a means for translatory motion, generally designated by the reference numeral 18, between the wall 9 that faces the device 8 and the device 8 itself; the means is constituted by a pneumatic actuator 19 and by a guiding member 20 which is arranged in an upward region with respect to the actuator 19. More specifically, the pneumatic actuator 19 is composed of a body 21 which supports a sliding stem 22, whose protruding end 23 is rigidly connected to the device 8. In detail, the body 21 is inserted horizontally, along its entire length, in the structure 7 through a suitable hole formed in the wall 9 and is stably locked with a nut 24 against the wall 9. The guiding member 20 is constituted by a bush 25 which is inserted in a hole formed in the wall 9 and by a tubular segment 26 which is slidingly inserted in the bush 25 so that the end 27, which protrudes with respect to the wall 9, is rigidly connected to the device 8. Clearly, the lengths of the stem 22 and of the segment 26 are defined so that their strokes outside the structure 7 are such as to cover the distance between the positions (A) and (B). Conveniently, the bush 25 is kept in its seat on one side by the rim of one of its ends and, on the other side, by a ring 27 which is forced onto the body of the bush 25. Moreover, the tying machine 5 includes a pneumatic source (not shown) for driving the translatory motion means 18 and optionally the crimping means 17, and a control means 28 which is provided on the front wall of the structure 7 and acts on the pneumatic source in order to drive the translatory motion means 18 and the crimping means 17.

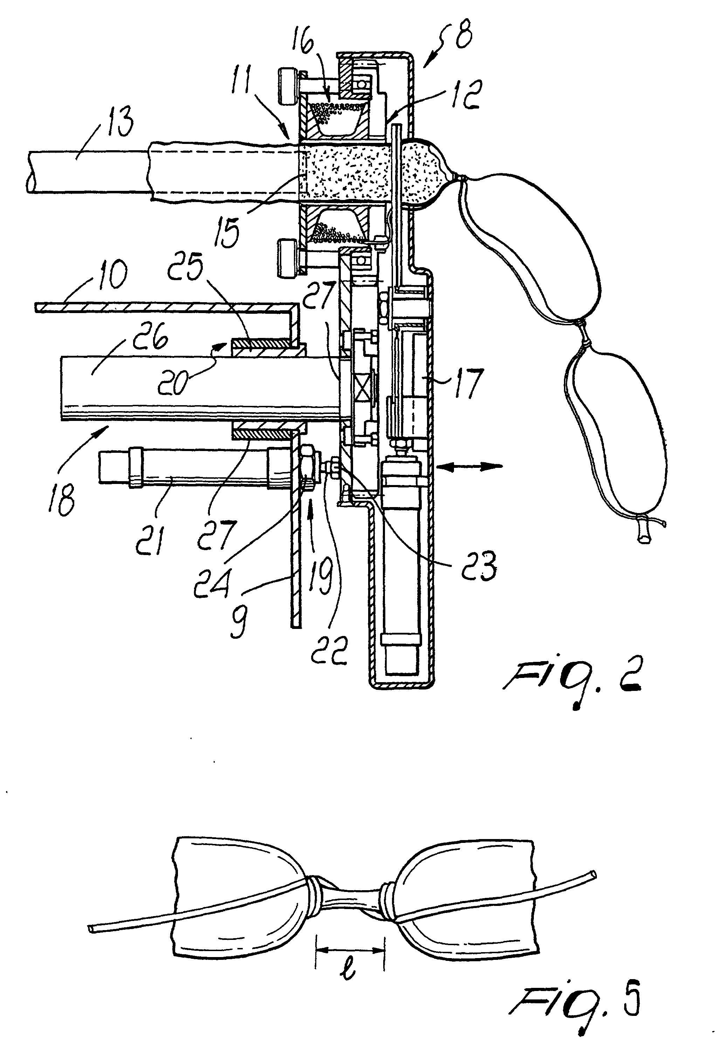

Operation is described hereinafter with reference to the accompanying figures. Assume that the tying machine 5 and the stuffing machine 6 have been set up as shown in Figure 1 and that the preliminary operations for preparing the stuffing machine 6 have been performed. Once the pneumatic source is in the steady state, the operator acts on the actuation means 28, which actuates the translatory motion means 18 in order to move the device 8 from the position (A) to the position (B). Then the operator fits a casing, like a sock, along the stuffing tube 13 and actuates again the translatory motion means 18, which returns the device 8 to the position (A). At this point, the actuation means 28 moves the crimping means 17 into the open position, as shown in Figure 4, and the operator manually extracts a portion of the casing and pulls it by its end, through the tying means 16, until an end portion thereof exits from the crimping means 17 through the opening that it forms. Then the crimping means 17 is preset in the closed position, as in Figure 3, and the initial tie is produced by winding. Once the tie has been completed, the crimping means 17 is returned to the open position and the stuffing machine 6, by virtue of the stuffing tube 13, fills the portion of casing that lies directly after the initial tie with a metered amount of meat. Once the first sausage has been formed, the crimping means 17 is again returned to the closed position in order to form the crimp of the filled casing and then the tying means 16 forms another tie. At this point, the translatory motion means 18 intervenes and moves the device 8 from the position (A) to an intermediate position (C), chosen by the operator; the two positions are spaced by a distance I. During this movement, the crimping means 17 removes from the stuffing tube 13 a portion of empty casing whose length is approximately I. Once the movement has been performed, the crimping means 17 is moved to an intermediate open position (not shown), and the device is again retracted to the position (A). After this, the crimping means 17 is returned to the closed position and then the tying means 16 forms another tie. The above-described operations are repeated identically until the casing fitted on the stuffing tube ends, except for when, every three or four sausages, a crimp which is longer than I is provided in order to facilitate the subsequent separating operations.

In practice it has been observed that the described tying machine achieves the intended aim and objects, since it achieves casing changing in a very simple manner and in a very short time. Further, differently from the devices of the prior art, a single pair of levers is sufficient, giving an evident benefit in terms of manufacturing costs. Finally, the tying machine is extremely flexible and versatile, since it can produce both normal sausages and "spaced" sausages and, in the latter case, with gradually different spacings according to the requirements of the operator.

The tying machine according to the invention is susceptible of numerous modifications and variations, within the scope of the inventive concept expressed by the appended claims.

All the details may be replaced with other technically equivalent elements.

In practice, the materials used, as well as the contingent shapes and dimensions, may be any according to requirements.

## Claims

1. A tying machine (5) for stuffed-meat products in general and for sausages in particular, comprising a supporting structure (7) and a tying device (8)
wherein said tying device (8) comprises crimping means (17) for crimping a casing filled with stuffed-meat products and tying means (10) for forming ties on the crimped casing by winding a string or cord on the crimped casing;
said tying device (8) being adapted to be moved on command, in the direction in which the meat to be stuffed is fed, between two end positions, one position being located closer to said structure, the other position being spaced from it; such that
during operation elongated crimped portions are formed, of a length substantially corresponding to the distance between said two end positions, and double ties are applied to both ends of said elongated crimped portions.

2. A tying machine according to claim 1,
**characterized in that**
said tying device (8) is placed to the side of a wall (9) of the structure (7) and **in that** it comprises a means (18) for translatory motion in said direction which is interposed between said wall (9) of said structure (7) and said tying device (8).

3. A tying machine according to one or more of the preceding claims,
**characterized in that**
said translatory motion means (18) comprises a pneumatic actuator (19) and a guiding member (20) which is arranged in an upward region with respect to said actuator.

4. A tying machine according to one or more of the preceding claims,
**characterized in that**
said actuator (19) comprises a body (21) which is stably inserted in a hole which is formed in said wall (9) and a stem (22) which protrudes from said body, the end of said stem that protrudes from said structure being rigidly connected to said tying device (8).

5. A tying machine according to one or more of the preceding claims,
**characterized in that**
said guiding member (20) comprises a bush (29) which is stably inserted in a hole formed in said wall (9) and a tubular seqment (26) which is slidingly inserted in said bush, the end (27) of said segment that protrudes from said structure being rigidly connected to said device.

6. A tying machine according to one or more of the preceding claims,
**characterized in that**
the strokes of said stem (22) and of said segment (26) are at least equal to the distance between said end positions.

7. a tying machine according to one or more of the preceding claims,
**characterized in that**
it comprises a pneumatic source which is suitable to drive said actuator (19).

8. The tying machine according to one or more of the preceding claims,
**characterized in that**
it comprises a means for actuating said translatory motion means.

## Patentansprüche

1. Maschine (5) zum Abbinden von mit einer Fleischmasse gefüllten Waren, insbesondere Wurstwaren, die eine Stützstruktur (7) und einen Abbindevorrichtung (8) aufweist,
wobei diese Abbindevorrichtung (8) Mittel (17) zum Einhängen einer mit dieser Fleischmasse gefüllten Haut und ein Abbindegerät (10), um Abbindungen um die eingehängte Haut zu legen, aufweist, wobei ein Faden oder eine Schnur um die eingehängte Haut gelegt wird;
wobei diese Abbindevorrichtung (8) geeignet ist, bei Bedarf zwischen zwei Endpositionen hin- und hergefahren zu werden, in die Richtung, in der die zum Einfüllen der Wurstwaren benötigte Fleischmasse transportiert wird, wobei eine Position sich näher an dieser Struktur befindet, während die andere sich weiter weg von dieser Struktur befindet; so dass
während des Betriebs längliche eingeengte Bereiche geformt werden mit einer Länge, die im Wesentlichen dem Abstand zwischen diesen Endpositionen entspricht, und Doppelabbindungen um beide Enden von diesen länglichen eingeengten Bereichen angelegt werden.

2. Maschine gemäß Anspruch 1,
**dadurch gekennzeichnet, dass**
sich diese Abbindevorrichtung an der Seite einer Wand (9) dieser Struktur (7) befindet, und eine Vorrichtung (18) zum Hin- und Herbewegen entlang dieser Richtung aufweist, die sich zwischen dieser Wand (9) dieser Struktur (7) und der Abbindevorrichtung (8) befindet.

3. Maschine gemäß einem der vorherigen Ansprüche,
**dadurch gekennzeichnet, dass**
diese Vorrichtung (18) zum Hin- und Herbewegen einen pneumatischen Aktuator (19) und ein Führungsteil (20) aufweist, wobei sich dieses Führungsteil an einer Stelle über dem pneumatischen Aktuator befindet.

4. Maschine gemäß einem der vorherigen Ansprüche,
**dadurch gekennzeichnet, dass**
dieser Aktuator (19) einen Körper (21), der fest in eine Öffnung eingesetzt ist, die in dieser Wand (9) geformt ist, und einen Stift (22) aufweist, der aus diesem Körper herausragt, wobei das Ende dieses Stifts, das aus dieser Struktur herausragt, fest mit dieser Abbindevorrichtung (8) verbunden ist.

5. Maschine gemäß einem der vorherigen Ansprüche,
**dadurch gekennzeichnet, dass**
dieses Führungsteil (20) ein Lagerfutter (29) aufweist, das fest in eine Öffnung dieser Wand (9) eingesetzt ist, und ein rohrförmiges Segment (26) aufweist, das verschiebbar in dieses Lagerfutter eingesetzt ist, wobei das Endteil (27) dieses Segments, das aus dieser Struktur herausragt, fest mit dieser Vorrichtung verbunden ist.

6. Maschine gemäß einem der vorherigen Ansprüche,
**dadurch gekennzeichnet, dass**
der Bewegungsradius dieses Stifts (22) und dieses Segments (26) mindestens dem Abstand zwischen zwei Endpositionen entspricht.

7. Maschine gemäß einem der vorherigen Ansprüche,
**dadurch gekennzeichnet, dass**
diese Maschine einen pneumatischen Antrieb aufweist, der in der Lage ist, diesen pneumatischen Aktuator (19) zu bewegen.

8. Maschine gemäß einem der vorherigen Ansprüche,
**dadurch gekennzeichnet, dass**
diese Maschine Mittel aufweist, um diese Hin- und Herbewegung auszuführen.

## Revendications

1. Machine d'attache (5) pour des produits de chair à farce en général, et pour des saucisses en particulier, comprenant une structure de support (7) et un dispositif d'attache (8),
dans laquelle ledit dispositif d'attache (8) comprend des moyens de sertissage (17) pour sertir une enveloppe remplie de produits de chair à farce, et des moyens d'attache (10) pour former des attaches sur l'enveloppe sertie en enroulant une ficelle ou un cordon sur l'enveloppe sertie ;
ledit dispositif d'attache (8) étant conçu pour être déplacé sur commande, dans la direction suivant laquelle est amenée la chair devant être farcie, entre deux positions d'extrémité, une position étant plus proche de ladite structure, l'autre position en étant espacée ; de telle sorte que, pendant la mise en oeuvre, des parties serties allongées sont formées, d'une longueur correspondant sensiblement à la distance entre lesdites deux positions d'extrémité, et que des attaches doubles sont appliquées aux deux extrémités desdites parties serties allongées.

2. Machine d'attache selon la revendication 1,
**caractérisée en ce que**
ledit dispositif d'attache (8) est placé sur le côté d'une paroi (9) de la structure (7), et **en ce qu'**elle comprend un moyen (18) pour un mouvement de translation suivant ladite direction, qui est interposé entre ladite paroi (9) de ladite structure (7) et ledit dispositif d'attache (8).

3. Machine d'attache selon l'une ou plusieurs des revendications précédentes, **caractérisée en ce que**
ledit moyen pour un mouvement de translation (18) comprend un actionneur pneumatique (19) et un élément de guidage (20) qui est agencé dans une zone située vers le haut par rapport audit actionneur.

4. Machine d'attache selon l'une ou plusieurs des revendications précédentes, **caractérisée en ce que**
ledit actionneur (19) comprend un corps (21) qui est inséré, de façon stable, dans un orifice qui est pratiqué dans ladite paroi (9) et une tige (22) qui dépasse dudit corps, l'extrémité de ladite tige qui dépasse de ladite structure étant raccordée, de façon rigide, audit dispositif d'attache (8).

5. Machine d'attache selon l'une ou plusieurs des revendications précédentes, **caractérisée en ce que**
ledit élément de guidage (20) comprend une bague (29) qui est insérée, de façon stable, dans un orifice qui est pratiqué dans ladite paroi (9) et un segment tubulaire (26) qui inséré, de façon coulissante, dans ladite bague, l'extrémité (27) dudit segment qui dépasse de ladite structure étant raccordée, de façon rigide, audit dispositif.

6. Machine d'attache selon l'une ou plusieurs des revendications précédentes, **caractérisée en ce que**
les courses de ladite tige (22) et dudit segment (26) sont au moins égales aux distances entre lesdites positions d'extrémité.

7. Machine d'attache selon l'une ou plusieurs des revendications précédentes, **caractérisée en ce qu'**elle comprend une source pneumatique qui est adaptée pour entraîner ledit actionneur (19).

8. Machine d'attache selon l'une ou plusieurs des revendications précédentes, **caractérisée en ce qu'**elle comprend un moyen pour actionner ledit moyen pour un mouvement de translation.
